# EUROPÄISCHE PATENTANMELDUNG

(11) **EP 3 835 456 A1**
(43) Veröffentlichungstag der Anmeldung: **16.06.2021**
(21) Anmeldenummer: 19214772.6
(22) Anmeldetag: 10.12.2019
(51) Int. Cl.: C25B 9/18, C25B 15/02, C25B 15/06, H01M 8/04223, H01M 8/04664, H01M 8/04701, H01M 8/04858, H01M 8/2465, H01M 8/0432, H01M 8/04537, H01M 8/249

(54) **BRENNSTOFFZELLEN- UND ELEKTROLYSESTROMMANAGEMENTANORDNUNG UND DAZUGEHÖRIGES VERFAHREN**

(71) Anmelder: sunfire GmbH, 01237 Dresden (DE)
(72) Erfinder: STAROSKE, Wolfgang, 01187 Dresden (DE)
(74) Vertreter: Hansen, Jochen

(57) **Zusammenfassung**

Die Erfindung betrifft eine Brennstoffzellen- und Elektrolysestrommanagementanordnung (1) umfassend mindestens zwei Brennstoffzellen- oder Elektrolysezellblöcke (2) in einer Zellreihenschaltung, Bypassleitungen (3), angeschlossen an die Zellblöcke (2), Messaufnehmer für Spannung, Strom und Temperatur in und / oder an den einzelnen Zellblöcken (2), eine Steuerung in der Brennstoffzellen- und Elektrolysestrommanagementanordnung (41) oder die zentrale Steuerung (42) zur Aufnahme und Verarbeitung der aufgenommenen Messwerte und eine Kommunikationsverbindung der Brennstoffzellen- und Elektrolysestrommanagementanordnung (1) mit der zentralen Steuerung (42) und / oder der Steuerung der Strommanagementanordnung (41).

Ferner betrifft die Erfindung ein Brennstoffzellen- und Elektrolysestrommanagementverfahren.

## Beschreibung

Die Erfindung betrifft eine Brennstoffzellen- und Elektrolysestrommanagementanordnung sowie das dazugehörige Verfahren.

Immer wenn elektrochemische Elemente wie beispielsweise Batteriezellen, Brennstoffzellen oder auch Elektrolysezellen in Reihe geschaltet werden, begrenzt das schlechteste Element die Leistung der gesamten Reihenschaltung.

Aus dem **Stand der Technik** sind in Batteriesystemen, insbesondere solchen mit Lithiumbatterien, sogenannte Batteriemanagementsysteme, auch Ausgleichsschaltungen, Balancer circuits oder By-pass circuits genannt, bekannt. Es handelt sich dabei um leistungselektronische Schaltung mit eher geringer Leistung.

Beim Entladevorgang einer Batterie entnehmen die Batteriemanagementsysteme Zellen mit einer hohen Kapazität, einem niedrigen Innenwiderstand und einer hohen Spannung beim Entladen Energie und führen sie Zellen mit einer niedrigen Kapazität, einem hohen Innenwiderstand und einer niedrigeren Spannung beim Entladen zu. So wird eine gleichmäßige Entladung aller Zellen eines Batteriesystems erreicht. Beim Ladevorgang einer Batterie entnehmen Batteriemanagementsysteme Zellen mit einer niedrigen Kapazität, einem hohen Innenwiderstand und einer hohen Spannung beim Laden Energie und führen sie Zellen mit einer hohen Kapazität, einem niedrigen Innenwiderstand und einer niedrigen Spannung beim Laden zu.

Die Druckschrift US 6,211,650 B1 offenbart eine Schaltung und ein Verfahren zum Begrenzen der Ladespannung, die an eine einzelne Zelle einer Vielzahl von Zellen angelegt wird, aus denen eine Batterie besteht, die in Reihe geladen wird. Es wurde speziell für die Verwendung mit Akkus entwickelt, die durch Überladung beschädigt werden können, beispielsweise Lithium-Ionen-Akkus. Im Einzelnen umfasst das Verfahren die folgenden Schritte: Erfassen des tatsächlichen Spannungspegels der einzelnen Zelle, Vergleichen des tatsächlichen Spannungspegels der einzelnen Zelle mit einem spezifischen Spannungspegel und Liefern eines dafür repräsentativen Fehlersignals und Umleiten des Ladestroms um die einzelne Zelle, der notwendig ist, um den Spannungspegel der einzelnen Zelle im Allgemeinen gleich dem spezifischen Spannungspegel zu halten, während die verbleibenden Zellen weiter geladen werden.

Bei Reihenschaltungen von Brennstoffzellen wird der Strom so begrenzt beziehungsweise reduziert, dass in keiner Zellstapelanordnung eine zu niedrige Spannung und keine zu hohe Temperatur auftreten. Bei Reihenschaltungen von Elektrolysezellen wird der Strom so begrenzt beziehungsweise reduziert, dass in keiner Zellstapelanordnung eine zu hohe Spannung und keine zu hohe Temperatur auftreten. Dieser Vorgang wird Spannungs- und Temperaturnachregelung genannt. Dabei wird die Leistung der gesamten Reihenschaltung verringert.

Die **Probleme im Stand der Technik** sind dabei im Wesentlichen, dass das schlechteste Element die Leistung der gesamten Reihenschaltung begrenzt, da der Strom durch diese Reihenschaltung zur Einhaltung der technischen Spezifikationen, also Spannung und Temperatur, begrenzt werden muss. Im Brennstoffzellenbetrieb haben die schlechten Elemente die niedrigste Spannung und die höchste Temperatur. Im Elektrolysebetrieb haben die schlechtesten Elemente die höchste Spannung und die höchste Temperatur. Bei Festoxidzellen ist das schlechteste Element durch den höchsten Innenwiderstand oder Defekte die zu einer Temperaturerhöhung führen wie beispielsweise Zellbrüche mit lokalen Wasserstoffbränden gekennzeichnet. Um auch die schlechtesten Elemente innerhalb ihrer Spezifikation zu betreiben, wird der Strom so begrenzt, dass Minimal-/Maximalspannung und Maximaltemperatur nicht unter- beziehungsweise überschritten werden. Ist das schlechteste Element aufgrund von Produktions- oder Alterungstoleranzen oder aufgrund von Defekten deutlich schlechter als die anderen Elemente in der Reihenschaltung, dann muss der Strom so stark begrenzt werden, dass die mögliche Leistung der anderen Elemente in der Reihenschaltung nicht mehr genutzt werden kann.

Der vorliegenden Erfindung liegt die **Aufgabe** zugrunde eine analog zu einem aktiven Batteriemanagementsystem aufgebaute Schaltung bereitzustellen, die an die Ströme und Spannungen von Brennstoffzellen- und Elektrolysesystemen angepasst ist und die es ermöglicht Strom und Leistung zumindest teilweise an schlechten Zellen oder Zellstapelanordnungen vorbeizuleiten.

**Gelöst** wird diese Aufgabe mit einer Brennstoffzellen- und Elektrolysestrommanagementanordnung gemäß Hauptanspruch sowie einem dazugehörigen Verfahren gemäß nebengeordnetem Anspruch.

Die Brennstoffzellen- und Elektrolysestrommanagementanordnung umfasst mindestens zwei Brennstoffzellen- oder Elektrolysezellblöcke in einer Zellreihenschaltung, Bypassleitungen, die an die Zellblöcke angeschlossen sind, Messaufnehmer für Spannung, Strom und Temperatur in und / oder an den einzelnen Zellblöcken, eine Steuerung in der Brennstoffzellen- und Elektrolysestrommanagementanordnung oder die zentrale Steuerung zur Aufnahme und Verarbeitung der aufgenommenen Messwerte und eine Kommunikationsverbindung der Brennstoffzellen- und Elektrolysestrommanagementanordnung mit der zentralen Steuerung und / oder der Steuerung der Strommanagementanordnung.

Die Brennstoff- oder Elektrolysezellblöcke können sowohl einzelne Zellen und / oder Zellstapel als auch Zellstapelanordnungen umfassen.

Die Strommanagementanordnung kann an die Blockspannungsabgriffe wie beispielsweise die Keramikklemmen am Ende der Platindrähte angeschlossen werden. Mithilfe der Anordnung können dann Ströme von bis zu 20 Prozent des Gesamtstroms an schlechten Zellen, Zellstapeln oder Zellstapelanordnungen vorbeigeleitet werden und so eine Überhitzung und eine zu hohe oder zu niedrige Spannung, abhängig davon, ob es sich um Brennstoffzellen- oder Elektrolysesysteme handelt, vermieden werden.

Das Brennstoffzellen- und Elektrolysestrommanagementverfahren weist die folgenden Schritte auf:
a. Messen von Spannung, Strom und Temperatur der einzelnen Zellblöcke, wobei die Messdaten entweder direkt von der Strommanagementanordnung ermittelt werden oder über die zentrale Steuerung in die Strommanagementanordnung eingespeist werden;
b. Vergleichen der aktuellen Messdaten mit Referenzmessdaten;
c. Berechnen der in den einzelnen Zellblöcken umzuleitenden Strommengen;
d. bedarfsweises Umleiten der berechneten Strommengen über eine Bypassleitung in den einzelnen Zellblöcken, um eine Begrenzung der Gesamtleistung durch einzelne, defekte Zellblöcke zu umgehen, beziehungsweise eine Begrenzung der Gesamtleistung zu verhindern.

Die Spannungsmessung an den einzelnen Zellblöcken kann von der Strommanagementanordnung durchgeführt werden.

Auch die Temperaturmessung an den einzelnen Zellblöcken kann von der Strommanagementanordnung durchgeführt werden.

Die Spannungsnachregelung kann über die Strommanagementanordnung durchgeführt werden.

Auch die Temperaturnachregelung kann über die Strommanagementanordnung durchgeführt werden.

Wenn sowohl die Strom- und Spannungsmessung als auch die Temperaturmessung über die Strommanagementanordnung durchgeführt werden, ist es möglich, dass die Strommanagementanordnung vollautomatisch unabhängig von der zentralen Steuerung arbeitet und eine Verbindung mit dieser nicht mehr zwingend notwendig ist. Sowohl die Spannungsnachregelung als auch die Temperaturnachregelung können in diesem Fall über die Strommanagementanordnung erfolgen. Durch eine Verbindung der Strommanagementanordnung mit der zentralen Steuerung ist auch in dem Fall von der Aufnahme und Auswertung der Messwerte direkt über die Strommanagementanordnung die Möglichkeit der externen Überwachung und Steuerung der Anordnung beispielsweise im Fall einer Fehlfunktion weiterhin gegeben.

Die Brennstoffzellen- und Elektrolysestrommanagementanordnung sowie das dazugehörige Verfahren ermöglichen die maximale Ausnutzung der installierten Zellen, Zellstapel und Zellstapelanordnungen, die zu einer Reihenschaltung zusammengeschaltet sind. Die Begrenzung der Leistung durch das schlechteste Element wird verhindert, da das schlechteste Element entlastet wird, indem ein Teil des Stroms an diesem vorbeigeleitet wird. Hierdurch wird zwar der Wirkungsgrad des einzelnen Elements verringert, allerdings kann so die Gesamtleistung erhöht werden. Auch weitere allgemeine Faktoren wie beispielsweise Defekte, die zu einer Reduzierung der Leistung in einzelnen Zellblöcken führen, können so ausgeglichen werden. Dies wiederum führt zu einer besseren Ausnutzung der installierten Zellen und damit zu einer verbesserten Kostenbilanz.

Nachfolgend wird ein Ausführungsbeispiel der Erfindung anhand der beiliegenden Zeichnung in der **Abbildungsbeschreibung** detailliert beschrieben, wobei dieses die Erfindung erläutern soll und nicht beschränkend zu werten ist:
Es zeigt:

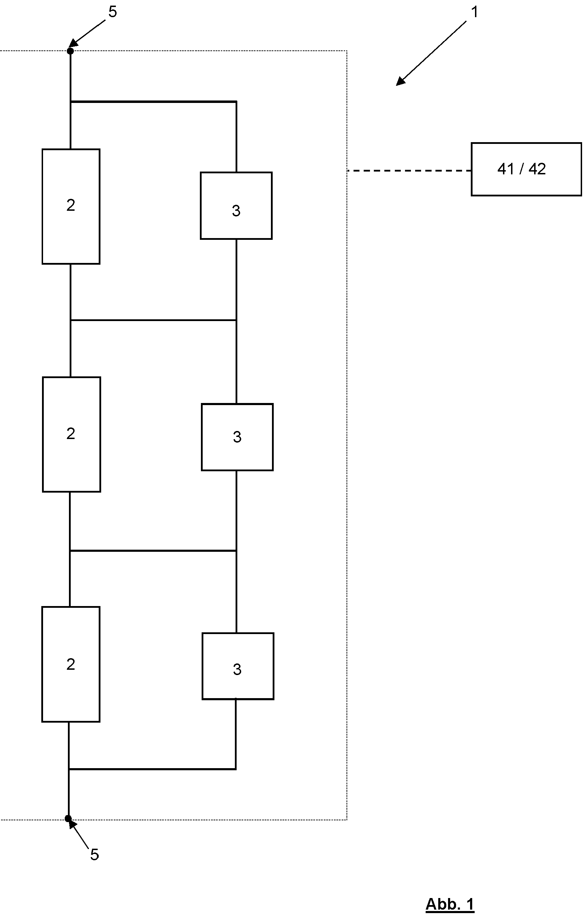

- Abb. 1: ein Blockdiagramm einer Brennstoffzellen- und Elektrolysestrommanagementanordnung.

In **Abb. 1** ist ein Blockdiagramm einer Brennstoffzellen- und Elektrolysestrommanagementanordnung 1 dargestellt. Die Brennstoffzellen- und Elektrolysestrommanagementanordnung 1 umfasst drei Brennstoff- oder Elektrolysezellblöcke 2 und die jeweils zugehörigen Bypassleitungen 3. Jeder Brennstoff- oder Elektrolysezellblock 2 hat Messaufnehmer für die Messung von Strom, Spannung und Temperatur integriert. Für jeden Brennstoff- oder Elektrolysezellblock 2 ist eine Bypassleitung 3 installiert. Die Brennstoffzellen- und Elektrolysestrommanagementanordnung 1 ist über Anschlussklemmen 5 in den Stromkreislauf, welcher in der Abbildung nicht dargestellt ist, eingebunden. Über die Steuerung wird das bedarfsweise Umleiten der berechneten Strommengen über die Bypassleitungen 3 gesteuert. Dies kann entweder in der Steuerung der Strommanagementanordnung 41 oder der zentralen Steuerung 42 erfolgen. So können über die Nutzung von Bypassleitungen 3 einzelne in Reihe geschaltete Brennstoff- oder Elektrolysezellblöcke 2 durch das Durchfließen von geringeren Strommengen entlastet werden, womit die Effizienz des Gesamtsystems eigentlich sinkt, jedoch die Leistung nicht mehr begrenzt wird. Das schlechteste Element der Reihenschaltung wirkt nicht mehr beschränkend.

### Bezugszeichenliste

- 1: Brennstoffzellen- und Elektrolysestrommanagementanordnung
- 2: Brennstoff- oder Elektrolysezellblock
- 3: Bypassleitung
- 41: Steuerung in der Brennstoffzellen- und Elektrolysestrommanagementanordnung
- 42: zentrale Steuerung
- 5: Anschlussklemmen

## Patentansprüche

1. Brennstoffzellen- und Elektrolysestrommanagementanordnung (1) **umfassend**
- mindestens zwei Brennstoffzellen- oder Elektrolysezellblöcke (2) in einer Zellreihenschaltung;
- Bypassleitungen (3), angeschlossen an die Zellblöcke (2);
- Messaufnehmer für Spannung, Strom und Temperatur in und / oder an den einzelnen Zellblöcken (2);
- eine Steuerung in der Brennstoffzellen- und Elektrolysestrommanagementanordnung (41) oder die zentrale Steuerung (42) zur Aufnahme und Verarbeitung der aufgenommenen Messwerte und
- eine Kommunikationsverbindung der Brennstoffzellen- und Elektrolysestrommanagementanordnung (1) mit der zentralen Steuerung (42) und / oder der Steuerung der Strommanagementanordnung (41).

2. Anordnung nach Anspruch 1,
**dadurch gekennzeichnet, dass**
Brennstoffzellen- oder Elektrolysezellblöcke (2) einzelne Zellen und / oder Zellstapel und / oder Zellstapelanordnungen umfassen.

3. Brennstoffzellen- und Elektrolysestrommanagementverfahren die folgenden Schritte aufweisend:
a. Messen von Spannung, Strom und Temperatur der einzelnen Zellblöcke (2), wobei die Messdaten entweder direkt von der Strommanagementanordnung (41) ermittelt werden oder über die zentrale Steuerung (42) in die Strommanagementanordnung (1) eingespeist werden;
b. Vergleichen der aktuellen Messdaten mit Referenzmessdaten;
c. Berechnen der in den einzelnen Zellblöcken (2) umzuleitenden Strommengen;
d. bedarfsweises Umleiten der berechneten Strommengen über eine Bypassleitung (3) in den einzelnen Zellblöcken (2), um eine Begrenzung der Gesamtleistung durch einzelne, defekte Zellblöcke (2) zu umgehen.

4. Verfahren nach Anspruch 3,
**dadurch gekennzeichnet, dass**
die Spannungsmessung an den einzelnen Zellblöcken (2) von der Strommanagementanordnung (1) durchgeführt wird.

5. Verfahren nach Anspruch 3 und 4,
**dadurch gekennzeichnet, dass**
die Temperaturmessung an den einzelnen Zellblöcken (2) von der Strommanagementanordnung (1) durchgeführt wird.

6. Verfahren nach einem der vorangehenden Ansprüche,
**dadurch gekennzeichnet, dass**
die Spannungsnachregelung von der Strommanagementanordnung (1) durchgeführt wird.

7. Verfahren nach einem der vorangehenden Ansprüche,
**dadurch gekennzeichnet, dass**
die Temperaturnachregelung von der Strommanagementanordnung (1) durchgeführt wird.
